# EUROPEAN PATENT SPECIFICATION

(11) **EP 1 385 277 B1**
(45) Date of publication and mention of the grant of the patent: **08.06.2005**
(21) Application number: 02255113.9
(22) Date of filing: 22.07.2002
(51) Int. Cl.: H04B 10/08, H04J 14/02, G02B 6/43, G02B 6/42

(54) **Transmission of supervisory data in an optical communication system**
Überwachungsdatenübertragung in einem optischen Kommunikationssystem
Transmission de données de surveillance dans un système de communication optique

(43) Date of publication of application: 28.01.2004
(73) Proprietor: Agilent Technologies, Inc. - a Delaware corporation -, Palo Alto, CA 94303-0870 (US)
(72) Inventor: Chown, David, Ipswich, Suffolk IP7 6DE (GB)
(74) Representative: Coker, David Graeme

(56) References cited:
- WO-A-00/67400
- WO-A-01/08422
- US-B1- 6 282 017

## Description

The present invention relates to optical communication systems.

In an optical communication system, most of the data that is carried over the system is "payload" data, namely phone calls, e-mail, Internet messages, etc. A part of the data is "supervisory" data relating to operation of the system itself.

Supervisory data typically includes status and fault signals transmitted from network equipment at remote locations in the network to a central network control centre as well as command and control signals transmitted from the control centre to network equipment at remote locations.

Supervisory data is currently transmitted on a supervisory channel, at a wavelength distinct from the wavelength or wavelengths on which the payload data is transmitted.

Typically, for a system where payload data is transmitted over channels in the C band - namely 1525 to 1575 nm - the supervisory channel is at 1510, 1600 or 1300 nm.

Also typically, transmitters and receivers for the payload channel(s) and the supervisory channel are assembled from discrete laser and photodiode components with the combination and separation of the payload channels and the supervisory channel performed by a discrete WDM coupler/splitter device. These components have pigtails and are spliced together to perform the functions of launching, combining, separating and receiving the payload channels and the supervisory channel.

US-B1-6282017 concerns as optical communication system and optical amplifier transmitting supervisory information.

Additionally, electronics are required to drive the lasers in response to the digital payload and supervisory data inputs and to provide digital payload and supervisory data outputs in response to the signals provided by the photodiodes.

Recently, transmitter, receiver and transceiver modules have become available which, in systems not providing for the presence of supervisory channels, eliminate the need for splicing discrete components together and providing additional electronics by arranging all the required electric and optoelectronic components within a single housing with an electrical connector receiving a digital electrical signal and an optical connector receiving a patchcord. This simplifies the work of Network Equipment Manufactures (NEMs) as they no longer have to splice fibres and are no longer required to have a detailed knowledge of discrete lasers and photodiodes.

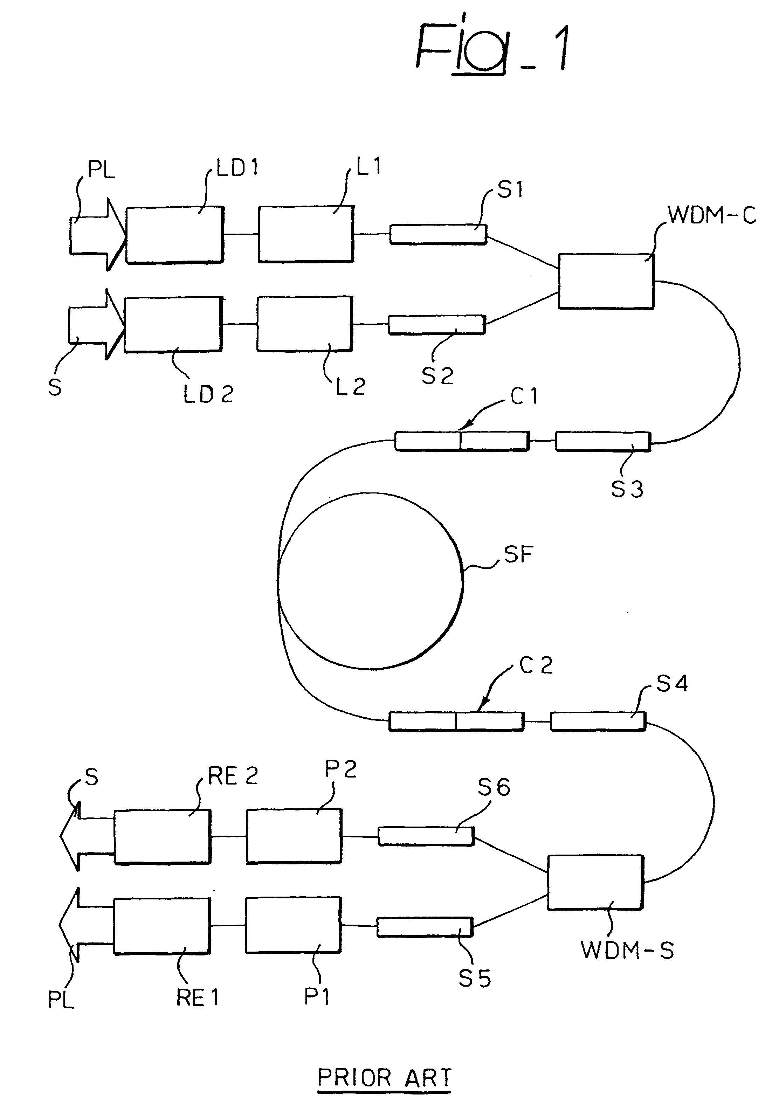

Figure 1 shows an optical communication system of the prior art including a transmitter portion and a receiver portion shown at the top and bottom of the drawing, respectively.

The transmitter portion is intended to permit the transmission of digital data including payload data PL and supervisory data S over a system fibre SF.

The input payload data PL is fed to a laser drive electronics LD1 that drives a first laser source L1 to generate a first (payload) optical signal at a first wavelength.

Similarly, input data representing supervisory data S is fed to a further laser drive electronics LD2 that drives a second laser source L2 to generate a second optical signal at a second wavelength representative of supervisory data.

The optical signals representative of payload and supervisory data are combined in a WDM combiner WDM-C to be launched into the fibre SF. Splices S1 and S2 are provided between the laser sources L1 and L2 and the WDM combiner WDM-C.

A further splice S3 is provided between the combiner WDM-C and a first connector C1 (that is actually comprised of two complementary parts) for connection to the system fibre SF.

The receiver portion of the system has a structure that is substantially identical to the structure of the transmitter portion described in the foregoing.

The combined WDM optical signal coming from the system fibre SF is sent to a WDM splitter WDM-S. The optical wavelength carrying the payload signal and the optical wavelength carrying the supervisory signal are thus separated and sent towards a first photodetector P1 and a second photodetector P2, respectively.

The detected signals from the photodetectors P1 and P2 are fed to respective receiver electronics RE1 and RE2 to produce an output digital payload signal PL and an output digital supervisory signal S.

Again, at the receiver end of the system, a splice S4 is provided between the connector C2 associated at the receiving end of the system fibre SF and the WDM splitter WDM-S. Two additional splices S5 and S6 are arranged between the splitter WDM-S and photodetectors P1 and P2, respectively.

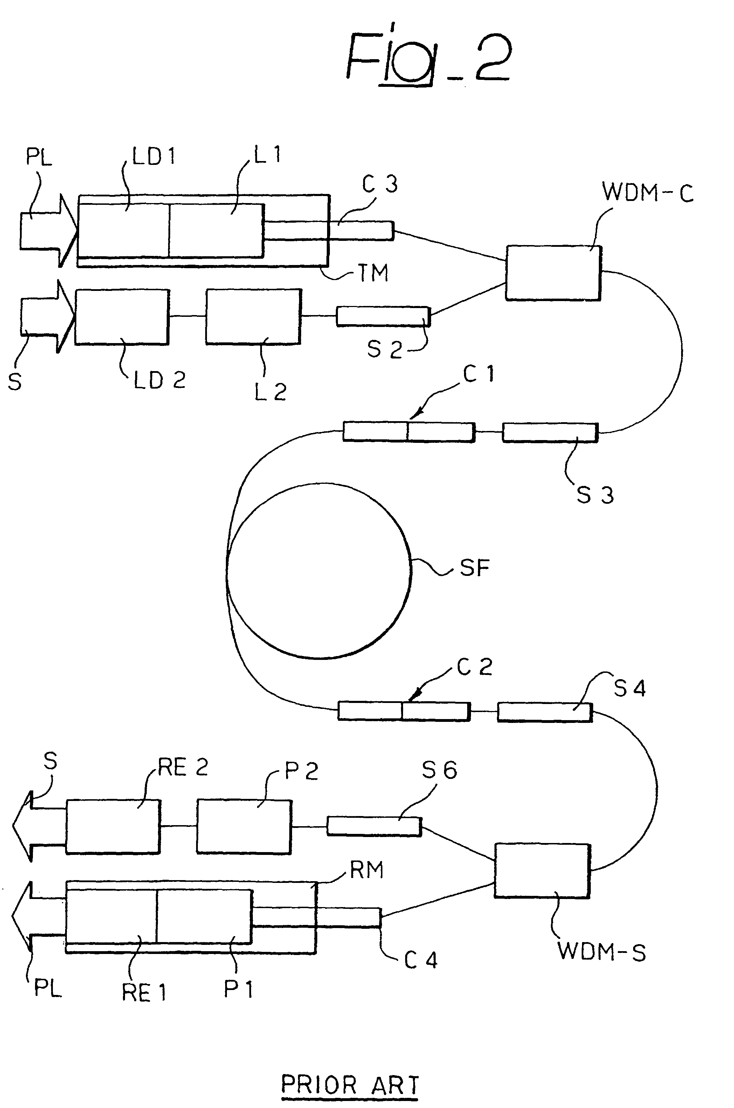

Figure 2 shows another prior art solution wherein components identical or equivalent to those already shown and described in the foregoing are indicated with the same references as used in figure 1.

In the prior art arrangement of figure 2, the payload laser L1 and the associated laser driver electronic LD1 at the transmitting end, as well as the payload photodetector P1 and the associated receiver electronics RE1 at the receiving end of the system are integrated into transmitter and receiver modules indicated TM and RM, respectively.

Some of the splices of figure 1 (specifically those splices designated S1 and S5 in figure 1) are dispensed with. Splices such as splices S2, S3, S4, and S6 however still exist in the arrangement of figure 2 these splices having to be made and the fibre handled and secured.

At least in principle, it would be possible to integrate the supervisory laser L2 and the associated laser drive electronics LD2 as well as the supervisory photodetector P2 and the associated receiver electronics RE2 to form respective transmitter and receiver modules. However, such modules are not commercially available and, in any case, would not dispense with all the splicing and fibre handling considered.

It is therefore an object of this invention to devise an improved solution having the advantage of no longer having to splice fibres and wherein detailed knowledge of discrete lasers and photodiodes for use with supervisory channels is no longer required.

According to the present invention, such a solution is provided by means of the system having the features set forth in the claims that follow.

The concept of the invention as defined in the main claim distinctly encompasses a transmitter module, a receiver module as well as a transmitter/receiver (i.e. transceiver) module. It will thus be appreciated that referring to signals being converted between a given format and another format encompasses conversion in either direction, that is from said given format into said other format and vice versa.

The invention will now be described, by way of example only, with reference to the annexed drawings, wherein:
- Figures 1 and 2, relating to prior art solutions, have been already described in the foregoing,
- Figure 3 shows a first embodiment of a system according to the invention,
- Figure 4, including portions designated 4a and 4b, respectively, shows typical arrangements for a transmitter module and receiver module for use in the invention, and
- Figure 5 shows a transceiver where the transmitter and receiver modules shown in Figure 4a and 4b are integrated to a single device.

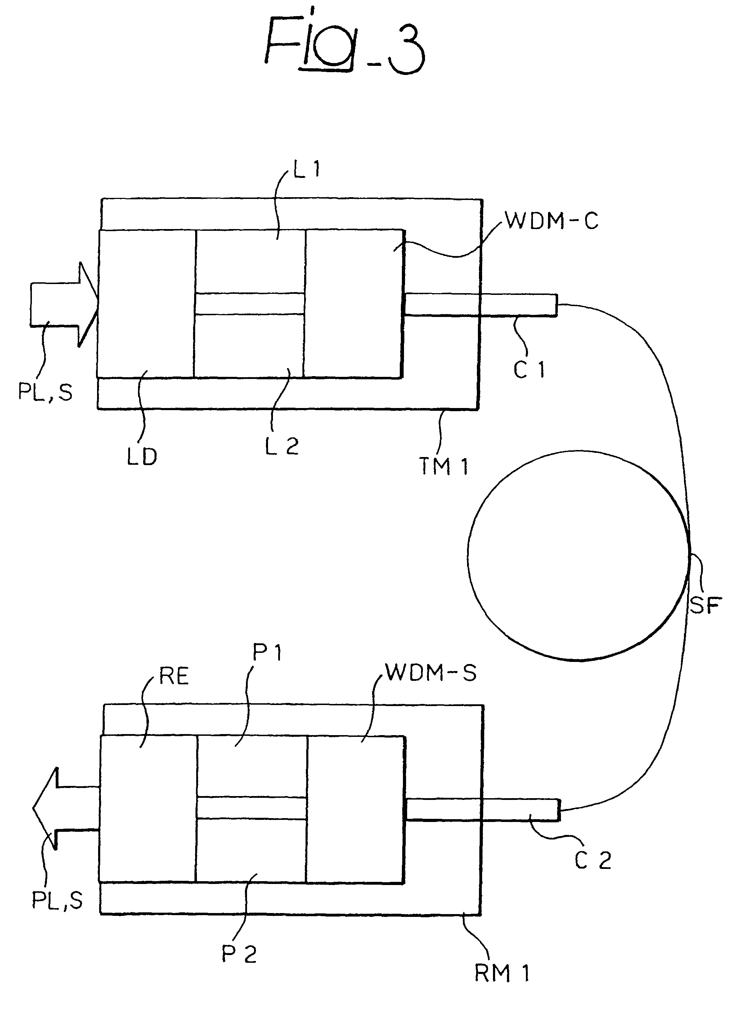

Again, in the drawings of figures 3, 4 and 5 the same references were used to designate parts/components that are identical or, in any case, equivalent to those already described in connection with figures 1 and 2.

This applies primarily to the system fibre SF, the connectors C1 and C2 associated therewith as well as the WDM combiner and splitter modules WDM-C and WDM-S. The combiner and splitter modules ensure conversion of the signal conveying both payload and supervisory information between an "aggregated" WDM signal format adopted for transmission over the system fibre SF and a "disaggregated" signal format, namely the format where payload and supervisory data are conveyed over distinct, separate optical signals i.e. before WDM multiplexing or after WDM de-multiplexing.

Similarly, references L1 and L2 designate respective laser sources adapted to generate respective "disaggregated" optical signals (i.e. before WDM multiplexing) corresponding to payload and supervisory information.

Finally, references P1 and P2 designate photodetectors intended to convert the "disaggregated" optical signals conveying the payload and supervisory information (i.e. after WDM de-multiplexing) back to the electrical format.

In the exemplary embodiment of the invention shown in figure 3, the payload and supervisory lasers L1, L2 as well as the respective (preferably common) drive electronics LD and the WDM combiner WDM-C are integrated into a single transmitter module TM1.

Similarly, the WDM de-multiplexer (splitter) unit WDM-S, the payload and supervisory photodetectors P1 and P2 together with the respective (again preferably common) electronics RE are similarly integrated into a single receiver module RM1.

Both modules TM1 and RM1 are self-contained modules adapted for direct connection (on the optical side) to the system fibre SF via connectors C1, C2, where all the splices provided in the prior art arrangements shown in figures 1 and 2 having been dispensed with. Stated otherwise, the components included in the modules TM1 and RM1 are connected by means of signal propagation paths that are exempt from splices.

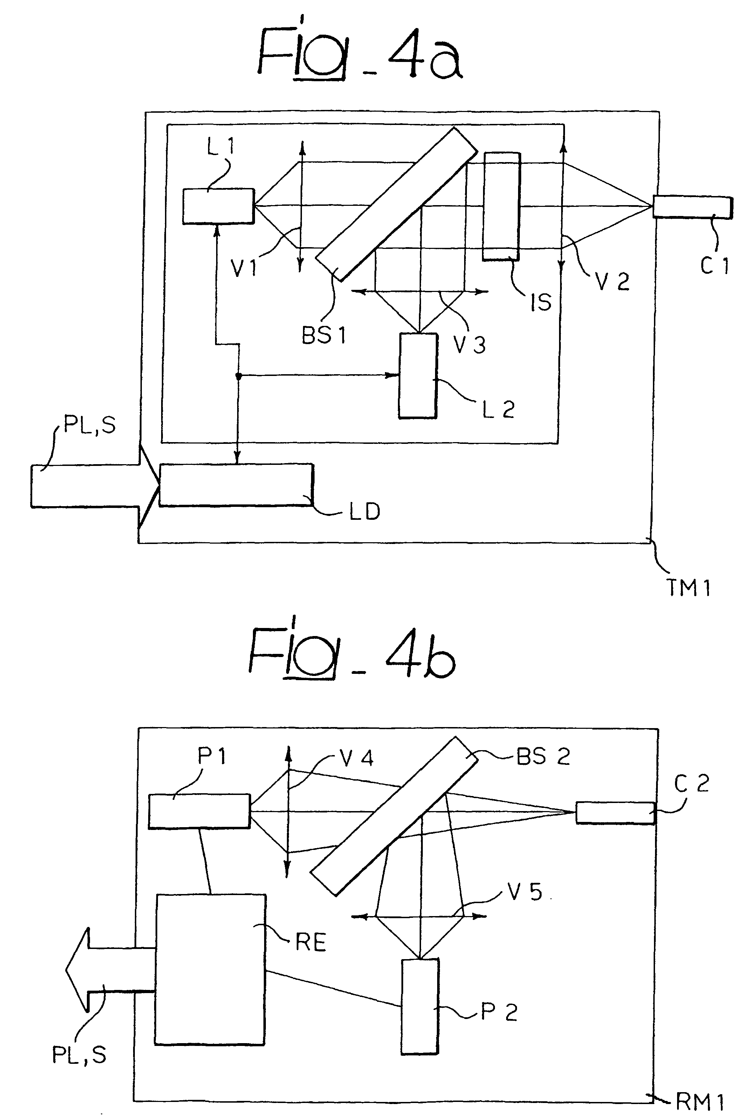

Figure 4a shows in greater detail the structure of the "optical" portion of the transmitter module TM1.

Light from the payload laser L1 is collimated by a lens V1, shown conventionally as a double headed arrow, and transmitted through a beam splitter BS1 and an optional isolator IS before being focussed into the connector C1 (comprised, for example, of a fibre stub) by a second lens V2.

Light from the supervisory laser L2 is similarly collimated by a third lens V3 and reflected by the beam splitter BS1 to be transmitted through the optional isolator before being focussed into the connector by the second lens V2.

At least one of the payload laser L1, supervisory laser L2, beam splitter BS1 and isolator IS may be mounted on a thermoelectric cooler (e.g. a Peltier-effect module) in a hermetic enclosure.

The laser drive electronics LD are typically mounted on a printed circuit board within the module housing. The electrical and optical connectors are mounted on the module housing.

Figure 4b shows the receiver module RM1 having a substantially similar structure.

Light from the connector R2 is incident on a beam splitter BS2. Light in the payload channel is transmitted through the beam splitter BS2 and focussed via a lens V4 onto the payload photodetector P1.

Light in the supervisory channel is reflected by the beam splitter and is focussed by a lens V5 onto the supervisory photodetector P2.

Again, the receiver electronics RE are mounted on a printed circuit board within the module housing. The electrical and optical connectors are mounted on the module housing.

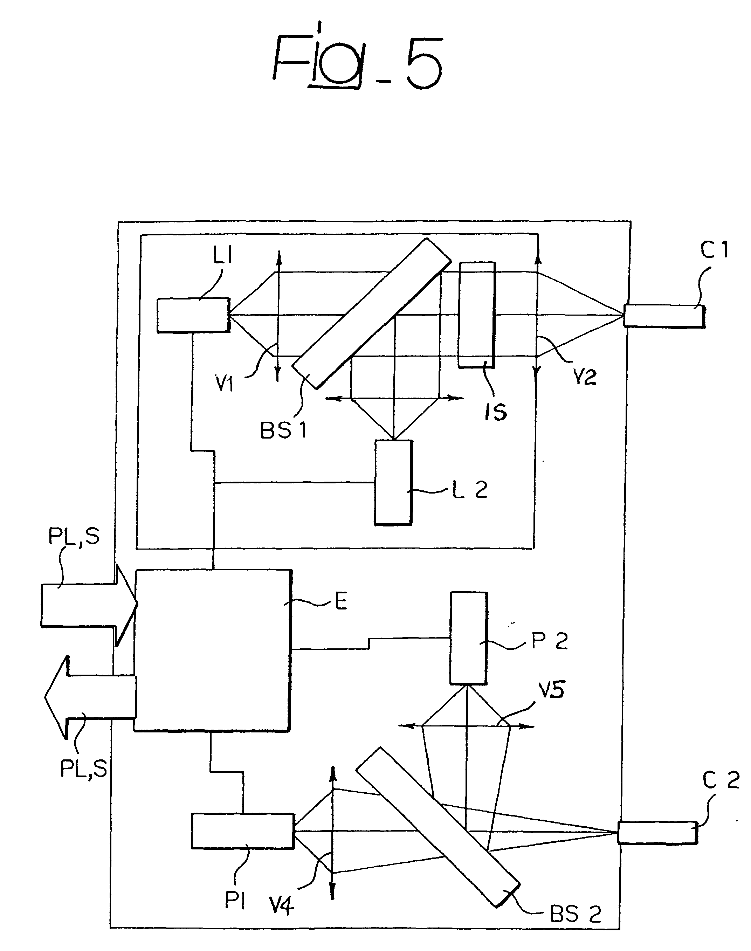

Figure 5 shows a transmitter-receiver i.e. transceiver module in which the transmitter and receiver functions of figures 4a and 4b are integrated into a single housing. Such an arrangement provides the additional advantage of the laser drive electronics LD and receiver electronics RE being adapted to be integrated to a single electronics sub-module designated E.

Of course, without prejudice to the basic principle of the invention, the details of construction and the embodiments may widely vary with respect to what has been described and illustrated purely by way of example, without departing from the scope of the present invention. Also, it will be appreciated that, according to the current meaning in the art, designations such as "optical", "light" and so on are in no way restricted to the sole domain of visible light radiation. These designations do in fact apply to the whole of the wavelength domains adapted for use in optical communications, including e.g. the UV and IR domains.

## Claims

1. A system for converting a first and a second signal representative of payload and supervisory information, respectively, between an electrical format (PL, S) and a WDM aggregated optical format, the system including:
- at least one first converter (L1, P1) for converting said first signal between said electrical format (P, L) and a first, disaggregated optical format,
- at least one second converter (L2, P2) for converting said second signal between said electrical format (S) and a second, disaggregated optical format, and
- at least one optical WDM converter (WDM-C, WDM-S) for converting said first and second signals between said first and second disaggregated optical formats and said WDM aggregated optical format,
**characterised in that** said at least one first converter (L1, P1), said at least one second converter (L2, P2) and said at least one optical WDM converter (WDM-C, WDM-S) are integrated to a single self-contained module (TM1, RM1) by means of signal propagation paths that are exempt from splices.

2. The system of claim 1, **characterised in that** said first converter (L1, P1) and said second converter (L2, P2) have associated signal processing electronics (LD, RE), said signal processing electronics (LD, RE) being integrated to said single self-contained module (TM1, RM1).

3. The system of either of claims 1 or 2, **characterised in that** said optical WDM converter (WDM-C, WDM-S) includes a beam splitter (BS1, BS2).

4. The system of claim 3, **characterised in that** said beam splitter (BS1, BS2) has associated an optical connector (C1, C2) for conveying said first and said second signals in said WDM aggregated optical format, and **in that** said beam splitter (BS1, BS2) is arranged to transfer optical radiation between said first converter (L1, P1) and said optical connector (C1, C2).

5. The system of either of claims 3 or 4, **characterised in that** said beam splitter (BS1, BS2) has associated an optical connector (C1, C2) for conveying said first and said second signals in said WDM aggregated optical format, and **in that** said beam splitter (BS1, BS2) is arranged to define an optical signal reflection path between said second converter (L2, P2) and said optical connector (C1, C2).

6. The system of any of claims 3 to 5, **characterised in that** said beam splitter (BS1, BS2) has associated radiation focusing elements (V1, V4; V3, V5) interposed between said beam splitter and said first (L1, P1) and said second (L2, P2) converter.

7. The system of either of claims 4 or 5, **characterised in that** it includes a further focusing element (V2) interposed between said beam splitter (BS1) and said optical connector (C1) for focusing onto said optical connector (C1) optical radiation propagating from said beam splitter (BS1).

8. The system of claim 7, **characterised in that** it includes an optical isolator (IS) interposed between said beam splitter (BS1) and said further focusing element (V2).

9. The system of any of claims 1 to 8, **characterised in that** said first converter and said second converter include laser sources (L1, L2) driven with said first and second signals (PL, S) in said electrical format, respectively, and **in that** said optical WDM converter includes a WDM combiner (WDM-C) to combine said first and said second signals in said first disaggregated optical format and said second disaggregated optical format to produce said WDM aggregated optical format, the system thus comprising a transmitter module (TM1).

10. The system of any of claims 1 to 6, **characterised in that** said optical WDM converter includes a WDM splitter (WDM-S) for de-multiplexing said WDM aggregated optical format into said first disaggregated optical format and said second disaggregated optical format, and **in that** said first converter and said second converter include photoelectric converters (P1, P2) for converting said first disaggregated optical format and said second disaggregated optical format into said first and second signals in said electrical format (PL, S), the system thus comprising a receiver module (RM1).

11. The system of any of claims 1 to 8, **characterised in that** it includes:
- A pair of said first converters (L1, P1), in the form of a first laser source (L1) and a first photoelectric converter (P1), respectively;
- a pair of said second converters in the form of a second laser source (L2) and a second photoelectric converter (P2), respectively; and
- a pair of said optical WDM converters, in the form of a WDM combiner (WDM-C) and a WDM splitter (WDM-S), respectively;
the arrangement being such that said first laser source (L1) and said second laser source (L2) are arranged for converting a first pair of first and second signals representative of payload and supervisory information, respectively, from said electrical format into a first pair of first disaggregated optical format and second disaggregated optical format signals and said WDM combiner (WDM-C) is adapted to convert said first pair of first and second disaggregated optical format signals into a first WDM aggregated optical format signal, and
- said WDM splitter (WDM-S) is adapted to convert a second WDM aggregated optical format signal into a second pair of first and second disaggregated optical format signals, and said first photoelectric converter (P1) and said second photoelectric converter (P2) are adapted to convert said second pair of first and second disaggregated optical format signals into a second pair of first and second signals representative of payload and supervisory information (PL, S) in said electrical format, the system thus comprising a transceiver module.

## Patentansprüche

1. Ein System zum Umwandeln eines ersten und eines zweiten Signals, die Nutzlast- beziehungsweise Überwachungsinformationen darstellen, zwischen einem elektrischen Format (PL, S) und einem aggregierten optischen WDM-Format, wobei das System folgende Merkmale aufweist:
- zumindest einen ersten Wandler (L1, P1) zum Umwandeln des ersten Signals zwischen dem elektrischen Format (P, L) und einem ersten, disaggregierten optischen Format,
- zumindest einen zweiten Wandler (L2, P2) zum Umwandeln des zweiten Signals zwischen dem elektrischen Format (S) und einem zweiten, disaggregierten optischen Format, und
- zumindest einen optischen WDM-Wandler (WDM-C, WDM-S) zum Umwandeln des ersten und des zweiten Signals zwischen dem ersten und dem zweiten disaggregierten optischen Format und dem aggregierten optischen WDM-Format,
**dadurch gekennzeichnet, dass** der zumindest eine erste Wandler (L1, P1), der zumindest eine zweite Wandler (L2, P2) und der zumindest eine optische WDM-Wandler (WDM-C, WDM-S) in ein einziges in sich geschlossenes Modul (TM1, RM1) integriert sind mittels Signalausbreitungswegen, die frei von Spleißstellen sind.

2. Das System gemäß Anspruch 1, **dadurch gekennzeichnet, dass** dem ersten Wandler (L1, P1) und dem zweiten Wandler (L2, P2) eine Signalverarbeitungselektronik (LD, RE) zugeordnet ist, wobei die Signalverarbeitungselektronik (LD, RE) in das einzige in sich geschlossene Modul (TM1, RM1) integriert ist.

3. Das System gemäß Anspruch 1 oder 2, **dadurch gekennzeichnet, dass** der optische WDM-Wandler (WDM-C, WDM-S) einen Strahlteiler (BS1, BS2) umfasst.

4. Das System gemäß Anspruch 3, **dadurch gekennzeichnet, dass** dem Strahlteiler (BS1, BS2) ein optischer Verbinder (C1, C2) zum Übermitteln des ersten und des zweiten Signals in dem aggregierten optischen WDM-Format zugeordnet ist, und dass der Strahlteiler (BS1, BS2) angeordnet ist, um eine optische Strahlung zwischen dem ersten Wandler (L1, P1) und dem optischen Verbinder (C1, C2) zu übertragen.

5. Das System gemäß Anspruch 3 oder 4, **dadurch gekennzeichnet, dass** dem Strahlteiler (BS1, BS2) ein optischer Verbinder (C1, C2) zum Übermitteln des ersten und des zweiten Signals in dem aggregierten optischen WDM-Format zugeordnet ist, und dass der Strahlteiler (BS1, BS2) angeordnet ist, um einen Optisches-Signal-Reflexionsweg zwischen dem zweiten Wandler (L2, P2) und dem optischen Verbinder (C1, C2) zu definieren.

6. Das System gemäß einem der Ansprüche 3 bis 5, **dadurch gekennzeichnet, dass** dem Strahlteiler (BS1, BS2) Strahlungsfokussierelemente (V1, V4; V3, V5) zugeordnet sind, die zwischen den Strahlteiler und den ersten (L1, P1) und den zweiten (L2, P2) Wandler eingefügt sind.

7. Das System gemäß Anspruch 4 oder 5, **dadurch gekennzeichnet, dass** dasselbe ein weiteres Fokussierelement (V2) umfasst, das zwischen den Strahlteiler (BS1) und den optischen Verbinder (C1) eingefügt ist zum Fokussieren einer optischen Strahlung, die sich von dem Strahlteiler (BS1) ausbreitet, auf den optischen Verbinder (C1).

8. Das System gemäß Anspruch 7, **dadurch gekennzeichnet, dass** dasselbe einen optischen Isolator (IS) umfasst, der zwischen den Strahlteiler (BS1) und das weitere Fokussierelement (V2) eingefügt ist.

9. Das System gemäß einem der Ansprüche 1 bis 8, **dadurch gekennzeichnet, dass** der erste Wandler und der zweite Wandler Laserquellen (L1, L2) umfassen, die mit dem ersten beziehungsweise dem zweiten Signal (PL, S) in dem elektrischen Format getrieben werden, und dass der optische WDM-Wandler einen WDM-Kombinierer (WDM-C) umfasst, um das erste und das zweite Signal in dem ersten disaggregierten optischen Format und dem zweiten disaggregierten optischen Format zu kombinieren, um das aggregierte optische WDM-Format zu erzeugen, womit das System ein Sendermodul (TM1) aufweist.

10. Das System gemäß einem der Ansprüche 1 bis 6, **dadurch gekennzeichnet, dass** der optische WDM-Wandler einen WDM-Teiler (WDM-S) umfasst zum Demultiplexen des aggregierten optischen WDM-Formats in das erste disaggregierte optische Format und das zweite disaggregierte optische Format, und dass der erste Wandler und der zweite Wandler photoelektrische Wandler (P1, P2) umfassen zum Umwandeln des ersten disaggregierten optischen Formats und des zweiten disaggregierten optischen Formats in das erste und das zweite Signal in dem elektrischen Format (PL, S), womit das System ein Empfängermodul (RM1) aufweist.

11. Das System gemäß einem der Ansprüche 1 bis 8, **dadurch gekennzeichnet, dass** dasselbe folgende Merkmale umfasst:
- ein Paar der ersten Wandler (L1, P1), jeweils in der Form einer ersten Laserquelle (L1) und eines ersten photoelektrischen Wandlers (P1);
- ein Paar der zweiten Wandler, jeweils in der Form einer zweiten Laserquelle (L2) und eines zweiten photoelektrischen Wandlers (P2); und
- ein Paar der optischen WDM-Wandler, jeweils in der Form eines WDM-Kombinierers (WDM-C) und eines WDM-Teilers (WDM-S);
wobei die Anordnung derart ist, dass die erste Laserquelle (L1) und die zweite Laserquelle (L2) angeordnet sind zum Umwandeln eines ersten Paars von erstem und zweitem Signal, die Nutzlast- beziehungsweise Überwachungsinformationen darstellen, von dem elektrischen Format in ein erstes Paar eines ersten und zweiten Signals eines disaggregierten optischen Formats, und der WDM-Kombinierer (WDM-C) angepasst ist, um das erste Paar von erstem und zweitem Signal des disaggregierten optischen Formats in ein erstes Signal des aggregierten optischen WDM-Formats umzuwandeln, und
wobei der WDM-Teiler (WDM-S) angepasst ist, um ein zweites Signal des aggregierten optischen WDM-Formats in ein zweites Paar von erstem und zweitem Signal des disaggregierten optischen Formats umzuwandeln, und der erste photoelektrische Wandler (P1) und der zweite photoelektrische Wandler (P2) angepasst sind, um das zweite Paar von erstem und zweitem Signal des disaggregierten optischen Formats in ein zweites Paar von erstem und zweitem Signal, die Nutzlast- und Überwachungsinformationen (PL, S) darstellen, in dem elektrischen Format umzuwandeln, womit das System ein Sende-/Empfangsgerätmodul aufweist.

## Revendications

1. Système destiné à convertir un premier et un deuxième signaux, représentatifs d'informations de charge utile et de surveillance, respectivement, entre un format électrique (PL, S) et un format optique regroupé par MRL, le système incluant :
- au moins un premier convertisseur (L1, P1) destiné à convertir ledit premier signal entre ledit format électrique (P, L) et un premier format optique, non regroupé ;
- au moins un deuxième convertisseur (L2, P2) destiné à convertir ledit deuxième signal entre ledit format électrique (S) et un deuxième format optique, non regroupé ; et
- au moins un convertisseur MRL optique (WDM-C, WDM-S) destiné à convertir lesdits premier et deuxième signaux entre lesdits premier et deuxième formats optiques non regroupés et ledit format optique regroupé par MRL,
**caractérisé en ce que** ledit au moins un premier convertisseur (L1, P1), ledit au moins un deuxième convertisseur (L2, P2) et ledit au moins un convertisseur MRL optique (WDM-C, WDM-S) sont intégrés en un unique module autonome (TM1, RM1) au moyen de chemins de propagation de signaux qui sont exempts d'épissures.

2. Système selon la revendication 1, **caractérisé en ce que** ledit premier convertisseur (L1, P1) et ledit deuxième convertisseur (L2, P2) ont des circuits électroniques (LD, RE) de traitement de signaux qui lui sont associés, lesdits circuits électroniques (LD, RE) étant intégrés en ledit module autonome (TM1, RM1) unique.

3. Système selon l'une ou l'autre des revendications 1 ou 2, **caractérisé en ce que** ledit convertisseur MRL optique (WDM-C, WDM-S) inclut un séparateur de faisceau (BS1, BS2).

4. Système selon la revendication 3, **caractérisé en ce que** ledit séparateur de faisceau (BS1, BS2) a un connecteur optique (C1, C2) qui lui est associé, destiné à transporter lesdits premier et deuxième signaux dans ledit format optique regroupé par MRL, et **en ce que** ledit séparateur de faisceau (BS1, BS2) est aménagé de manière à transférer le rayonnement optique entre ledit premier convertisseur (L1, P1) et ledit connecteur optique (C1, C2).

5. Système selon l'une ou l'autre des revendications 3 ou 4, **caractérisé en ce que** ledit séparateur de faisceau (BS1, BS2) a un connecteur optique (C1, C2) qui lui est associé, destiné à transporter ledit premier et ledit deuxième signaux dans ledit format optique regroupé par MRL, et **en ce que** le séparateur de faisceau (BS1, BS2) est aménagé de manière à définir un chemin de réflexion de signal optique entre ledit deuxième convertisseur (L2, P2) et ledit connecteur optique (C1, C2).

6. Système selon l'une quelconque des revendications 3 à 5, **caractérisé en ce que** ledit séparateur de faisceau (BS1, BS2) a des éléments (V1, V4 ; V3, V5) de focalisation de rayonnement qui lui sont associés, interposés entre ledit séparateur de faisceau et ledit premier (L1, P1) et ledit deuxième (L2, P2) convertisseurs.

7. Système selon l'une ou l'autre des revendications 4 ou 5, **caractérisé en ce qu'**il inclut un élément de focalisation (V2) supplémentaire, interposé entre ledit séparateur de faisceau (BS1) et ledit connecteur optique (C1), destiné à focaliser sur ledit connecteur optique (C1) un rayonnement optique se propageant depuis ledit séparateur de faisceau (BS1).

8. Système selon la revendication 7, **caractérisé en ce qu'**il inclut un isolateur optique (IS) interposé entre ledit séparateur de faisceau (BS1) et ledit élément de focalisation (V2) supplémentaire.

9. Système selon l'une quelconque des revendications 1 à 8, **caractérisé en ce que** ledit premier convertisseur et ledit deuxième convertisseur incluent des sources laser (L1, L2) pilotées au moyen desdits premier et deuxième signaux (PL, S) dans ledit format électrique, respectivement, et **en ce que** ledit convertisseur MRL optique inclut un combineur MRL (WDM-C) destiné à combiner ledit premier et ledit deuxième signaux dans ledit premier format optique non regroupé et ledit deuxième format optique non regroupé afin de produire ledit format optique regroupé par MRL, le système comprenant ainsi un module émetteur (TM1).

10. Système selon l'une quelconque des revendications 1 à 6, **caractérisé en ce que** ledit convertisseur MRL optique inclut un séparateur MRL (WDM-S) destiné à démultiplexer ledit format optique regroupé par MRL en ledit premier format optique non regroupé et ledit deuxième format optique non regroupé, et **en ce que** ledit premier convertisseur et ledit deuxième convertisseur incluent des convertisseurs photoélectriques (P1, P2) destinés à convertir ledit premier format optique non regroupé et ledit deuxième format optique non regroupé en lesdits premier et deuxième signaux dans ledit format électrique (PL, S), le système comprenant ainsi un module récepteur (RM1).

11. Système selon l'une quelconque des revendications 1 à 8, **caractérisé en ce qu'**il inclut :
- une paire desdits premiers convertisseurs (L1, P1), sous la forme d'une première source laser (L1) et d'un premier convertisseur photoélectrique (P1), respectivement ;
- une paire desdits deuxièmes convertisseurs, sous la forme d'une deuxième source laser (L2) et d'un deuxième convertisseur photoélectrique (P2), respectivement ; et
- une paire desdits convertisseurs MRL optiques, sous la forme d'un combineur MRL (WDM-C) et d'un séparateur MRL (WDM-S), respectivement ;
l'aménagement étant tel que ladite première source laser (L1) et ladite deuxième source laser (L2) sont aménagées de manière à convertir une première paire d'un premier et d'un deuxième signaux, représentatifs des informations de charge utile et de surveillance, respectivement, depuis ledit format électrique en une première paire de signaux du premier format optique non regroupé et du deuxième format optique non regroupé, et ledit combineur MRL (WDM-C) est adapté de manière à convertir ladite première paire de signaux du premier et du deuxième formats optiques non regroupés en un premier signal de format optique regroupé par MRL, et
- ledit séparateur MRL (WDM-S) est adapté de manière à convertir un deuxième signal de format optique regroupé par MRL en une deuxième paire de signaux du premier et du deuxième formats optiques non regroupés, et ledit premier convertisseur photoélectrique (P1) et ledit deuxième convertisseur photoélectrique (P2) sont adaptés de manière à convertir ladite deuxième paire de signaux du premier et du deuxième formats optiques non regroupés en une deuxième paire d'un premier et d'un deuxième signaux, représentatifs d'informations de charge utile et de surveillance (PL, S) dans ledit format électrique, le système comprenant ainsi un module émetteur - récepteur.
